# EUROPÄISCHE PATENTSCHRIFT

(11) **EP 2 794 937 B1**
(45) Veröffentlichungstag und Bekanntmachung des Hinweises auf die Patenterteilung: **18.01.2017**
(21) Anmeldenummer: 12798685.9
(22) Anmeldetag: 30.11.2012
(51) Int. Cl.: B32B 15/01, B65D 1/12, C21D 1/18, C21D 1/26, C21D 1/42, C21D 9/46, C21D 9/52, C22C 38/02, C22C 38/04, C22C 38/06, C22C 38/18, C23F 17/00, C21D 8/02, C22C 38/00, C23C 2/06, C23C 2/26, C23C 2/28

(54) **VERFAHREN ZUR HERSTELLUNG EINES VERPACKUNGSSTAHLS**
METHOD FOR PRODUCING PACKAGING STEEL
PROCÉDÉ DE FABRICATION D'UN ACIER D'EMBALLAGE

(30) Priorität: 22.12.2011 DE 102011056847
(43) Veröffentlichungstag der Anmeldung: 29.10.2014
(73) Patentinhaber: ThyssenKrupp Rasselstein GmbH, 56626 Andernach (DE)
(72) Erfinder: Szesni, Anika, 56220 Kettig (DE); Oberhoffer, Helmut, 56727 St. Johann (DE); Schlupp, Martin, 56598 Rheinbrohl (DE); Matusch, Dirk, 56567 Neuwied (DE); Sauer, Reiner, 56566 Neuwied (DE)
(74) Vertreter: Charrier Rapp & Liebau
(86) Internationale Anmeldenummer: PCT/EP2012/074115
(87) Internationale Veröffentlichungsnummer: WO 2013/092170

(56) Entgegenhaltungen:
- EP-A1- 0 406 619
- EP-A1- 0 823 490
- DE-A1- 1 483 247
- JP-A- H0 770 724
- JP-A- 60 021 368
- JP-A- 63 014 818
- FURUNO Y ET AL: "Steel sheet for making easy-to-open can - is hot and cold worked then heat treated to obtain controlled amt. of martensite in structure", WPI / THOMSON,, Bd. 1987, Nr. 50, 9. November 1987 (1987-11-09), XP002689556,

## Beschreibung

Die Erfindung betrifft ein Verfahren zur Herstellung eines Verpackungsstahls aus einem kaltgewalzten Stahlblech nach dem Oberbegriff des Anspruchs 1.

Aus der CH 469 810 ist ein dünnwandiges Stahlprodukt in Blech- oder Bandform und ein Verfahren zu dessen Herstellung bekannt, welches für die Herstellung von Weißblech mit höherer Festigkeit verwendet werden kann. Das Stahlprodukt ist aus einem unlegierten Stahl mit einem Kohlenstoffgehalt von 0,03 Gew.% - 0,25 Gew.% hergestellt und weist einen Mangangehalt von 0,2 Gew.% - 0,6 Gew.% sowie einen Siliciumgehalt von weniger als 0,011 Gew.% auf. Das Stahlprodukt zeichnet sich durch ein mindestens teilweise aus Martensit und Ferrit bestehendes Feingefüge aus und weist Zugfestigkeiten von mindestens 6328 kg/cm² und eine Bruchdehnung von mindestens 1,5 % auf. Zur Ausbildung dieser Eigenschaften wird das Stahlprodukt in einem Ofen zunächst auf eine Temperatur oberhalb des A₁-Punktes erhitzt und anschließend in einem Wasserbad abgeschreckt.

An die Eigenschaften von metallischen Materialien zur Herstellung von Verpackungen werden zunehmend höhere Anforderungen gestellt, insbesondere hinsichtlich ihrer Umformbarkeit und ihrer Festigkeit sowie ihrer Korrosionsbeständigkeit. Zwar sind aus dem Automobilbau sogenannte Dualphasenstähle bekannt, welche ein mehrphasiges Gefüge aufweisen, welches im Wesentlichen aus Martensit und Ferrit bzw. Bainit besteht, und welche einerseits über eine hohe Zugfestigkeit und andererseits auch über eine hohe Bruchdehnung verfügen. Ein solcher Dualphasenstahl mit einer Streckgrenze von mindestens 580 MPa und einer Bruchdehnung A₈₀ von mindestens 10% ist beispielsweise aus der WO 2009/021898 A1 bekannt. Aufgrund der Kombination der Materialeigenschaften solcher Dualphasenstähle mit einer hohen Festigkeit und einer guten Verformbarkeit eignen sich diese Dualphasenstähle insbesondere zur Herstellung von komplex geformten und hochbelastbaren Bauteilen, wie sie beispielsweise im Bereich des Karosseriebaus für Automobile benötigt werden.

Die Legierung der bekannten Dualphasenstähle setzt sich in der Regel aus einem Martensitanteil von 20% bis 70% und einem etwaigen Restaustenitanteil sowie Ferrit und/oder Bainit zusammen. Die gute Umformbarkeit von Dualphasenstählen wird durch eine relativ weiche Ferrit-Phase gewährleistet und die hohe Festigkeit wird durch die in einer Ferrit-Matrix eingebundenen festen Martensit- und Bainit-Phasen erzeugt. Die gewünschten Eigenschaften hinsichtlich Umformbarkeit und Festigkeit können bei Dualphasenstählen durch die Legierungszusammensetzung in weiten Bereichen gesteuert werden. So kann beispielsweise durch Zugabe von Silizium die Festigkeit durch Härtung des Ferrits bzw. Bainits erhöht werden. Durch Zugabe von Mangan kann die Martensitbildung positiv beeinflusst werden und es kann die Entstehung von Perlit verhindert werden. Auch die Zulegierung von Aluminium, Titan und Bor kann die Festigkeit erhöhen. Die Zulegierung von Aluminium wird zudem zur Desoxidation und zum Abbinden von ggf. in dem Stahl enthaltenem Stickstoff genutzt. Zur Ausbildung des mehrphasigen Legierungsgefüge werden Dualphasenstähle einer rekristallisierenden (bzw. austenitisierenden) Wärmebehandlung unterzogen, in der das Stahlband auf solche Temperaturen aufgeheizt und anschließend abgekühlt wird, dass sich die gewünschte mehrphasige Legierungsstruktur mit einer im Wesentlichen ferritisch-martensitischen Gefügeausbildung einstellt. Üblicherweise werden kaltgewalzte Stahlbänder aus wirtschaftlichen Gründen in einem Durchlaufglühverfahren im Glühofen rekristallisierend geglüht, wobei die Parameter des Glühofens, wie z. B. Durchlaufgeschwindigkeit, Glühtemperatur und Abkühlgeschwindigkeit, entsprechend dem geforderten Gefüge und den gewünschten Materialeigenschaften eingestellt werden.

Aus der DE 10 2006 054 300 A1 ist ein höherfester Dualphasenstahl sowie ein Verfahren zu dessen Herstellung bekannt, wobei in dem Herstellverfahren ein kalt- oder warmgewalztes Stahlband einer rekristallisierenden Durchlaufglühung in einem Durchlaufglühofen in einem Temperaturbereich von 820°C bis 1000°C unterzogen und das geglühte Stahlband anschließend von dieser Glühtemperatur mit einer Abkühlgeschwindigkeit zwischen 15 und 30 °C pro Sekunde abgekühlt wird.

Für die Verwendung als Verpackungsstahl eignen sich die aus dem Automobilbau bekannten Dualphasenstähle in der Regel nicht, weil diese insbesondere wegen der hohen Anteile von Legierungselementen wie Mangan, Silizium, Chrom und Aluminium sehr teuer sind und weil beispielsweise für die Verwendung von Verpackungsstahl im Lebensmittelbereich einige der bekannten Legierungselemente nicht verwendet werden dürfen, weil eine Verunreinigung der Lebensmittel durch Diffusion der Legierungsbestandteile in das Füllgut ausgeschlossen werden muss. Außerdem haben viele der bekannten Dualphasenstähle eine so hohe Festigkeit, dass sie mit den üblicherweise für die Herstellung von Verpackungsstahl verwendeten Anlagen nicht kaltgewalzt werden können.

Verpackungsstahl muss darüber hinaus eine hohe Korrosionsbeständigkeit sowie eine gute Beständigkeit gegen Säuren aufweisen, da die Inhaltsstoffe von Verpackungen aus Verpackungsstahl, wie z.B. Getränke- und Lebensmitteldosen, häufig säurehaltig sind. Verpackungsstahl weist daher eine metallische Beschichtung als Korrosionsschutzschicht auf. Die Qualität dieser Korrosionsschutzschicht hängt ganz wesentlich von ihrem Haftvermögen an der Stahlblechoberfläche ab. Zur Verbesserung der Korrosionsbeständigkeit der Beschichtung und der Haftung der Korrosionsschutzschicht an der Stahlblechoberfläche wird bspw. bei der Herstellung von Weißblech die galvanisch auf das Stahlblech aufgebrachte Zinnbeschichtung nach dem Beschichtungsvorgang aufgeschmolzen. Hierzu wird die auf das Stahlband galvanisch abgeschiedene Beschichtung auf eine wenig über dem Schmelzpunkt des Beschichtungsmaterials liegende Temperatur (bei einer Zinnbeschichtung bspw. auf 240°C) erhitzt und anschließend in einem Wasserbad abgeschreckt. Durch das Aufschmelzen der Beschichtung erhält die Oberfläche der Beschichtung ein glänzendes Aussehen und die Porösität der Eisen-Zinn-Legierungsschicht zwischen der Beschichtung und dem Stahlblech wird vermindert, wodurch sich deren Korrosionsbeständigkeit erhöht und ihre Durchlässigkeit für aggressive Stoffe, beispielsweise organische Säuren, vermindert.

Aus der JP07070724-A ist ein Verfahren zur Herstellung eines galvanisierten Stahlblechs bekannt, wobei der Stahl des Stahlblechs Phosphor, Silizium, Mangan oder Chrom enthält und nach einer Galvanisierung auf Temperaturen ≥ 650° C erhitzt wird um den Stahl zu rekristallisieren. Aus der EP 0 406 619 A1 ist ein Verfahren zur Herstellung eines galvanisierten Stahlblechs bekannt, wobei das Stahlblech niedrig gekohlt und Aluminium beruhigt ist und bei einer Temperatur oberhalb der Rekristallisationstemperatur kaltgewalzt, in eine reduzierende Atmosphäre gebracht und auf Temperaturen zwischen 200 und 350 °C mit einer Kühlrate von mindestens 30 ° C/s abgekühlt wird und für einen Zeitraum von 0 bis 10 Sekunden auf dieser Temperatur gehalten und anschließend auf Temperaturen im Bereich von 430 bis 500 °C mit einer Aufheizrate von wenigstens 10°C/s erhitzt, danach in ein Bad mit geschmolzenem Zink eingebracht und schließlich auf eine Temperatur von höchstens 370°C abgekühlt wird. Danach wird das auf diese Weise galvanisierte Stahlblech für mindestens 40 Sekunden in einem Temperaturbereich von 250 bis 320°C gealtert. Der verwendete Stahl kann dabei einen Kohlenstoffgehalt von 0,01 - 0,04 Gew.-%, einen Siliziumgehalt von weniger als 0,5 Gew.-%, einen Mangangehalt von 0,03 bis 0,40 Gew.-%, einen Phosphorgehalt von 0,02 bis 0,13 Gew.-%, einen Schwefelgehalt von weniger als 0,02 Gew.-%, einen Aluminiumgehalt von 0,02 bis 0,10 Gew.-% und einen Stickstoffgehalt von höchstens 0,07 Gew.-% mit unvermeidbaren Verunreinigungen und dem Rest Eisen aufweisen.

Hiervon ausgehend, liegt der Erfindung die Aufgabe zugrunde, einen höherfesten Verpackungsstahl mit guter Umformbarkeit und hoher Korrosionsbeständigkeit bereitzustellen und ein möglichst energieeffizientes Verfahren zu dessen Herstellung aufzuzeigen.

Diese Aufgaben werden mit einem Verfahren mit den Merkmalen des Anspruchs 1 sowie mit einem Stahlblech mit den Merkmalen des Anspruchs 18 gelöst. Bevorzugte Ausführungsbeispiele des Verfahrens und des Stahlblechs sind in den abhängigen Ansprüchen aufgezeigt.

Das erfindungsgemäße Stahlblech zur Verwendung als Verpackungsstahl wird aus einem niedriglegierten und kaltgewalzten Stahl mit einem Kohlenstoffgehalt von weniger als 0,1% hergestellt. Wenn im Folgenden von Stahlblech die Rede ist, wird darunter auch ein Stahlband verstanden. Das erfindungsgemäße Stahlblech zeichnet sich neben dem niedrigen Kohlenstoffgehalt durch die niedrigen Konzentrationen der weiteren Legierungsbestandteile aus. Bei dem Stahl, aus dem das erfindungsgemäße Stahlblech hergestellt wird, kann es sich um einen kaltgewalzten unlegierten oder niedriglegierten Stahl handeln. Als niedriglegiert werden Stähle bezeichnet, bei denen kein Legierungselement einen mittleren Gehalt von 5 Gew. % überschreitet. Der für die Herstellung des erfindungsgemäßen Stahlblechs verwendete Stahl weist insbesondere weniger als 0,5 Gew.-% und bevorzugt weniger als 0,4 Gew.% Mangan, weniger als 0,04 Gew.-% Silizium, weniger als 0,1 Gew.-% Aluminium und weniger als 0,1 Gew.-% Chrom auf. Der Stahl kann Legierungszusätze von Bor und/oder Niob und/oder Titan enthalten um die Festigkeit zu steigern, wobei die Zulegierung von Bor zweckmäßig im Bereich von 0,001-0,005 Gew.-% und die Zulegierung von Niob oder Titan im Bereich von 0,005-0,05 Gew.-% liegt. Bevorzugt werden dabei allerdings Gewichtsanteile für Nb < 0,03%.

Das Stahlblech wird zunächst mit einer metallischen Korrosionsschutzschicht beschichtet. Bei der Korrosionsschutzschicht kann es sich bspw. um eine Beschichtung aus Zinn, Zink, Aluminium, Chrom oder oder Zink/Nickel handeln. Die Beschichtung wird zweckmäßig elektrolytisch auf eine oder beide Hauptflächen des Stahlblechs aufgebracht.

Zur Ausbildung eines mehrphasigen Legierungsgefüge und zum Aufschmelzen der aufgebrachten Beschichtung wird das beschichtete Stahlblech dann zunächst rekristallisierend bei einer Aufheizrate von mehr als 75 K/s auf Temperaturen von mehr als 700°C geglüht und nach dem rekristallisierenden Glühen abgeschreckt. Das Abschrecken erfolgt mit einer hohen Abkühlrate, um eine Härtesteigerung im Stahl zu erzeugen. Hierfür wird mit einer Kühlrate von mindestens 100 K/s abgekühlt. Das rekristallisierende Glühen erfolgt zweckmäßig auf Temperaturen oberhalb des A1-Umwandlungspunkts. Durch eine rekristallisierende Wärmebehandlung mit einer Maximaltemperatur von Tₘₐₓ > Ac1, erfolgt ein Austenitisieren des Stahls und die anschließende rasche Abkühlung bildet ein mehrphasige Gefüge im Stahl aus, welches Ferrit und mindestens einen der Gefügebestandteile Martensit, Bainit und/oder Restaustenit umfasst. Das so behandelte Stahlblech weist eine Zugfestigkeit von mindestens 500 MPa und eine Bruchdehnung von mehr als 6% auf.

Erfindungsgemäß wird beim rekristallisierenden Glühen des beschichteten Stahlblechs die Korrosionsbeschichtung aufgeschmolzen, um dadurch die Korrosionsbeständigkeit der Beschichtung zu verbessern und die Haftung an der Stahlblechoberfläche zu verbessern. Zum Aufschmelzen der Beschichtung wird das beschichtete Stahlblech daher beim rekristallisierenden Glühen zumindest kurzzeitig auf eine Maximaltemperatur erhitzt, welche oberhalb der Schmelztemperatur des Beschichtungsmaterials liegt. Diese liegt bspw. bei verzinntem Stahlblech (Weißblech) bspw. bei 232°C, bei verzinktem Stahlblech bei 419°C und bei mit Aluminium beschichteten Stahlblechen bei 660°C.

Als besonders geeignet für die Herstellung des erfindungsgemäßen Verpackungsstahls hat sich das rekristallisierende (bzw. austenitisierende) Glühen des beschcihteten Stahlblechs mittels elektromagnetischer Induktion erwiesen. Es wurde überraschend festgestellt, dass auf die Zulegierung von Legierungsbestandteilen, welche typischerweise in Dualphasenstählen enthalten sind, wie z. B. die Zulegierung von Mangan (welches typischerweise in den bekannten Dualphasenstählen einen Gewichtsanteil von 0,8-2,0 % hat), von Silizium (welches typischerweise in den bekannten Dualphasenstählen einen Gewichtsanteil von 0,1-0,5 % hat) und von Aluminium (welches in den bekannten Dualphasenstählen mit einem Gewichtsanteil von bis zu 0,2% zulegiert wird) verzichtet werden kann, wenn ein kaltgewalztes Stahlblech mit einem Kohlenstoffgehalt von weniger als 0,1 Gew.-% zunächst bei einer Aufheizrate von mehr als 75 K/s mittels elektromagnetischer Induktion rekristallisierend (bzw. austenitisierend) geglüht und anschließend mit einer hohen Kühlrate von wenigstens 100 K/s abgeschreckt wird.

Der überraschend beobachtete Einfluß der induktiven Erwärmung auf die Ausbildung und die Anordnung der Martensit-Phase in dem induktionsgeglühten Stahlband könnte wie folgt erklärt werden: Ferromagnetische Stoffe sind bei Abwesenheit eines äußeren Magnetfeldes nicht magnetisiert. Es gibt im Inneren dieser Stoffe jedoch Bereiche (Weiss-Bereiche), die auch bei Abwesenheit äußerer Magnetfelder bis zur Sättigung magnetisiert sind. Die Weiss-Bereiche werden durch Bloch-Wände getrennt. Durch Anlegen eines äußeren Magnetfeldes wachsen zunächst die günstig orientierten, also energetisch bevorzugten Weiss-Bereiche auf Kosten der Nachbarbezirke. Die Bloch-Wände verschieben sich dabei. Das Umklappen der Elektronenspins erfolgt dabei nicht gleichzeitig sondern die Spins wechseln ihre Richtung zuerst an den Grenzen der Weiss-Bereiche. Bei weiterer Feldsteigerung, wird die Richtung der Magnetisierung in die des Feldes gedreht, bis sie in allen Bereichen mit der des äußeren Magnetfeldes übereinstimmt und die Sättigung erreicht wird. Es ist außerdem bekannt, dass ein Magnetfeld die Bewegung von Versetzungen beeinflussen kann, ohne äußere anliegende mechanische Spannungen. Es erscheint nun plausibel, dass die Bloch-Wände bei ihrer Verschiebung Kohlenstoffatome und/oder Versetzungen mitnehmen. Dadurch sammeln sich Kohlenstoff und/oder Versetzungen in bestimmten Bereichen, in denen sich anschließend nach Glühung und Abschreckung Martensit bildet.

Zweckmäßig handelt es sich bei dem Stahlblech um Fein- oder Feinstblech, das im Kaltwalzverfahren auf seine Enddicke gewalzt worden ist. Unter Feinblech wird dabei ein Blech mit einer Dicke von weniger als 3 mm verstanden und ein Feinstblech weist eine Dicke von weniger als 0,5 mm auf.

Nachfolgend wird die Erfindung anhand eines Ausführungsbeispiels näher erläutert:
Zur Herstellung von Ausführungsbeispielen des erfindungsgemäßen Stahlblechs zur Verwendung als Verpackungsstahl wurden im Stranggießen gefertigte und warmgewalzte sowie auf Coils gewickelte Stahlbänder aus Stählen mit folgender Zusammensetzung verwendet:
   - C: max. 0,1%;
   - N: max. 0,02 %;
   - Mn: max. 0,5 %, bevorzugt weniger als 0,4 %;
   - Si: max. 0,04 %, bevorzugt weniger als 0,02 %;
   - Al: max. 0,1 %, bevorzugt weniger als 0,05 %;
   - Cr: max. 0,1 %, bevorzugt weniger als 0,05 %;
   - P: max. 0,03 %;
   - Cu: max. 0,1 %;
   - Ni: max. 0,1 %;
   - Sn: max. 0,04 %;
   - Mo: max. 0,04 %;
   - V: max. 0,04 %;
   - Ti: max. 0,05 %, bevorzugt weniger als 0,02 %;
   - Nb: max. 0,05 %, bevorzugt weniger als 0,02 %;
   - B: max. 0,005 %
   - und andere Legierungsbestandteile sowie Verunreinigungen: max. 0,05 %,
   - Rest Eisen.

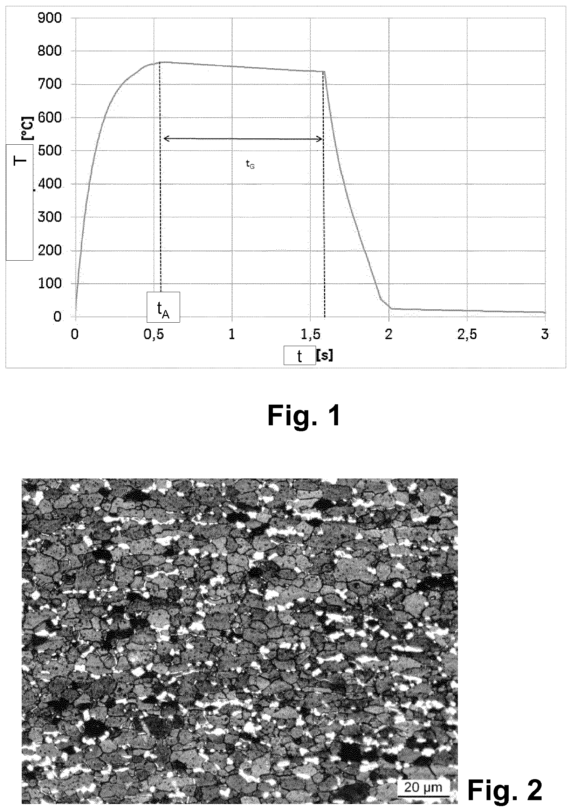

Dieses Stahlblech wurde zunächst unter einer Dickenreduktion von 50% bis 96% bis zu einer Enddicke im Bereich von ca. 0,5 mm kaltgewalzt und anschließend elektrolytisch in einer Bandverzinnungsanlage mit einer Zinnbeschichtung versehen. Nach dem Beschichtungsvorgang wurde das beschichtete Stahlblech in einem Induktionsofen durch Induktionserwärmung rekristallisierend geglüht. Hierbei wurde bspw. für eine Probengröße von 20x30 eine Induktionsspule mit einer Leistung von 50kW bei einer Frequenz von f=200kHz verwendet. Die Glühkurve ist in **Figur 1** gezeigt. Wie der Glühkurve der Figur 1 zu entnehmen ist, wurde das Stahlband innerhalb einer sehr kurzen Aufheizzeit t_{A}, welche typischerweise zwischen ca. 0,5 s und 10 s liegt, auf eine Maximaltemperatur Tₘₐₓ oberhalb der A₁-Temperatur (T (A₁) ≈ 725°C) erhitzt. Die Maximaltemperatur Tₘₐₓ liegt zweckmäßig unterhalb der Phasenübergangstemperatur T_{f} des ferromagnetischen Phasenübergangs (T_{f} ≈ 770°C). Die Temperatur des Stahlbands wurde dann über einen Glühzeitraum t_{G} von ca. 1 Sekunde auf einen Temperaturwert oberhalb der A₁-Temperatur aufrechterhalten. Während dieses Glühzeitraums t_{G} hat sich das Stahlband geringfügig von seiner Maximaltemperatur Tₘₐₓ von bspw. 750°C auf die A₁-Temperatur (ca. 725°C) abgekühlt. Danach wurde das Stahlband mittels einer Fluidkühlung, welche beispielsweise durch eine Wasserkühlung oder eine Luftkühlung oder durch eine Jet-Kühlung mit Inertgas erzeugt werden kann, innerhalb eines Abkühlinterwals von ca. 0,25 Sekunden auf Raumtemperatur (ca. 23°C) abgekühlt. Nach dem Abkühlen kann erforderlichenfalls noch ein Dressieren des beschichteten Stahlblechs erfolgen.

Das so behandelte Stahlblech wurde anschließend hinsichtlich seiner Festigkeit und seiner Bruchdehnung untersucht. Durch Vergleichsversuche konnte gezeigt werden, dass in allen Fällen die Bruchdehnung höher als 6% und in der Regel höher als 10% war und dass die Zugfestigkeit mindestens 500 MPa und in vielen Fällen sogar Zugfestigkeiten im Bereich von 600 bis 800 MPa aufgewiesen hat.

Durch eine Farbniederschlagätzung nach Klemm konnte nachgewiesen werden, dass die erfindungsgemäß behandelten Stahlbleche ein Legierungsgefüge aufweisen, welches Ferrit als weiche Phase und Martensit sowie ggf. Bainit und/oder Restaustenit als harte Phase aufweist. In Figur 2 ist ein Gefüge im Querschliff mit einer Farbniederschlagätzung nach Klemm dargestellt, wobei die dort weiß dargestellten Bereiche die Martensit-Phase und die blau bzw. braun dargestellten Bereiche die Ferrit-Phase zeigen. Es zeigt sich daraus eine zeilenförmige Anordnung der höherfesten Phase (Martensit/Bainit).

Durch Vergleichsversuche konnte ermittelt werden, dass die besten Ergebnisse hinsichtlich Festigkeit und Umformbarkeit erzielt werden, wenn die Aufheizrate beim rekristallisierenden Glühen zwischen 200 K/s und 1200 K/s liegt und wenn das rekristallisierend geglühte Stahlband anschließend mit einer Kühlrate von mehr als 100 K/s abgekühlt wird. Apparativ zweckmäßig sind hierbei Abkühlraten zwischen 350 K/s und 1000 K/s, weil dann auf eine apparativ aufwendige Wasser- oder Ölkühlung verzichtet werden kann und die Kühlung mittels eines Kühlgases, wie z. B. Luft, erfolgen kann. Die besten Ergebnisse bezüglich der Materialeigenschaften werden allerdings bei Verwendung einer Wasserkühlung mit Kühlraten von mehr als 1000 K/s erzielt. Zu hohe Abkühlraten bergen allerdings Rissgefahr und Verzug des Stahlblechs während des Abschreckens.

Da beim rekristallisierenden Glühen das beschichtete Stahlband auf Temperaturen oberhalb des Schmelzpunktes der (Zinn-)Beschichtung erhitzt worden ist, wurde die Korrosionsbeschichtung während des Glühens aufgeschmolzen. Dies führt zu einer Verbesserung der Korrosions- und Säure-Beständigkeit der Beschichtung und zu einer verbesserten Haftung der Beschichtung auf der Stahlblechoberfläche. Die verbesserte Haftung wird dabei durch die Ausbildung einer dünnen (verglichen mit der Dicke der Beschichtung) und sehr dichten Legierungsschicht zwischen der Stahlblechoberfläche und der Beschichtung bewirkt, welche aus Eisen-Atomen des Stahls und den Atomen des Beschichtungsmaterials (also bspw. Zinn) besteht. Je nach Verfahrensparameter können Dicken der Legierungsschicht erzielt werden, welche einer Legierungsschichtauflage von weniger als 0,5 g/m² oder sogar von weniger als 0,3 g/m² entsprechen. Durch das Aufschmelzen der Beschichtung beim rekristallisierenden Glühen wird ferner die Porösität der Beschichtung erniedrigt und damit deren Korrosions- und Säure-Beständigkeit erhöht. Gleichzeitig führt das Aufschmelzen der Beschichtung zu einer Verbesserung der Oberflächenbrillanz der Beschichtung, da die ursprünglich matte Oberfläche der Beschichtung durch das Aufschmelzen und schnelle Abschrecken glänzend wird.

Es hat sich gezeigt, dass sich nach der Abschreckung des beschichteten Stahlblechs in einem Wasserbad auf der Oberfläche der Beschichtung eine dunkle Oxidschicht ausbildet. Zur Entfernung dieser unerwünschten Oxidschicht wird das beschichtete Stahlblech während oder nach dem Abschrecken zweckmäßig mit einer leichten Säure, bspw. einer 15%-igen Salzsäure behandelt. Es können dafür jedoch auch andere Säuren und in anderen Konzentrationen verwendet werden. Besonders effizient ist es, wenn als Abschreckflüssigkeit ein kaltes Säurebad verwendet wird, welches die Säure enthält. Dann kann die Entfernung der Oxidschicht durch die Säurebehandlung und das Abschrecken gleichzeitig durch Eintauchen des beschichteten Stahlblechs in das Säurebad erfolgen.

Das erfindungsgemäß hergestellte Stahlblech eignet sich hervorragend zur Verwendung als Verpackungsstahl. So können beispielsweise aus dem erfindungsgemäßen Stahlblech Konserven- oder Getränkedosen gefertigt werden, welche die insbesondere im Lebensmittelbereich geforderten hohen Anforderungen an die Korrosions- und Säurebeständigkeit von Verpackungen erfüllen.

Die Beschichtung kann dabei je nach den Erfordernissen einseitig oder beidseitig erfolgen.

Gegenüber den aus dem Automobilbau bekannten Dualphasenstählen zeichnet sich das erfindungsgemäße Stahlblech zur Verwendung als Verpackungsstahl insbesondere durch die wesentlich niedrigeren Herstellkosten und durch den Vorteil aus, dass ein Stahl mit geringer Legierungskonzentration und wenigen Legierungsbestandteilen verwendet werden kann, wodurch Verunreinigungen der verpackten Lebensmittel vermieden werden können. Hinsichtlich der Festigkeit und der Umformbarkeit ist das erfindungsgemäße Stahlblech vergleichbar mit den aus dem Automobilbau bekannten Dualphasenstählen. Das walzharte Gefüge des kaltgewalzten Stahls wird durch das rekristallisierende Glühen in ein mehrphasiges Gefüge umgewandelt, welches eine hohe Zugfestigkeit und eine gute Bruchdehnung aufweist. Das rekristallisierende Glühen erfolgt dabei - anders als bspw. bei den bekannten Verzinnungsverfahren - erst nach der Beschichtung des Stahlblechs mit einer metallischen Beschichtung. Da gemäß der Erfindung gleichzeitig mit dem rekristallisierenden Glühen die metallische Beschichtung aufgeschmolzen wird, erhöht sich auch die Qualität der Korrosionsbeschichtung hinsichtlich ihrer Korrosions- und Säurebeständigkeit und hinsichtlich ihres Oberflächenglanzes. Das erfindungsgemäße Verfahren ist daher sehr energieeffizient, weil die Gefügeumwandlung im Stahl und das Aufschmelzen der Beschichtung gleichzeitig in einem einzigen Verfahrensschritt erfolgt (rekristallisierendes Glühen mit anschließender Abschreckung). Das rekristallisierende Glühen des Stahlblechs kann daher (nach dem Beschichten) in der Beschichtungsanlage und nicht wie im Stand der Technik üblich (vor dem Beschichten) außerhalb der Beschichtungsanlage in einem gesonderten Glühschritt erfolgen. Dies ermöglicht eine schlanke Prozessführung und reduziert den apparativen Aufwand erheblich. Eine rekristallisierende Wärmebehandlung des Stahlblechs vor dem Beschichtungsvorgang ist in dem erfindungsgemäßen Verfahren nicht erforderlich.

## Patentansprüche

1. Verfahren zur Herstellung eines Verpackungsstahls aus einem kaltgewalzten Stahlblech aus einem un- oder niedriglegierten Stahl mit einem Kohlenstoffgehalt von weniger als 0,1 Gew.-% und folgenden Obergrenzen für den Gewichtsanteil der Legierungsbestandteile:
- N: max. 0,02 %,
- Mn: max. 0,4 %,
- Si: max. 0,04 %,
- Al: max. 0,1 %,
- Cr: max. 0,1 %,
- P: max. 0,03 %,
- Cu: max. 0,1 %,
- Ni: max. 0,1 %,
- Sn: max. 0,04 %,
- Mo: max. 0,04 %
- V: max. 0,04 %;
- Ti: max. 0,05 %,
- Nb: max. 0,05 %,
- B: max. 0,005 %,
- andere Legierungsbestandteile, einschl. Verunreinigungen:max. 0,05 %,
- Rest Eisen,
**dadurch gekennzeichnet, dass** das Stahlblech zunächst mit einer metallischen Beschichtung beschichtet und anschließend rekristallisierend bei einer Aufheizrate von mehr als 75 K/s auf Temperaturen oberhalb der Ac1-Temperatur des Stahls geglüht wird, so dass die metallische Beschichtung aufschmilzt, und das beschichtete und geglühte Stahlblech abschließend mit einer Kühlrate von mindestens 100 K/s abgeschreckt wird, wodurch sich in dem Stahl ein mehrphasiges Gefüge ausbildet, welches Ferrit und mindestens einen der Gefügebestandteile Martensit, Bainit und/oder Restaustenit umfasst.

2. Verfahren nach Anspruch 1, **dadurch gekennzeichnet, dass** das beschichtete Stahlblech beim rekristallisierenden Glühen mit einer Aufheizrate von mehr als 100 K/s auf Temperaturen von mehr als 700°C erhitzt und abschließend mit einer Kühlrate von mindestens 500 K/s abgeschreckt wird.

3. Verfahren nach Anspruch 2, **dadurch gekennzeichnet, dass** das beschichtete Stahlblech nach dem rekristallisierenden Glühen mit einer Kühlrate von mehr als 1000 K/s abgeschreckt wird.

4. Verfahren nach Anspruch 1, **dadurch gekennzeichnet, dass** das mehrphasige Gefüge zu mehr als 80% und bevorzugt zu wenigstens 95% aus den Gefügebestandteilen Ferrit, Martensit, Bainit und/oder Restaustenit besteht.

5. Verfahren nach einem der voranstehenden Ansprüche, **dadurch gekennzeichnet, dass** das Stahlblech aus einem niedriglegierten Stahl gefertigt ist, welcher Bor und/oder Niob und/oder Titan enthält.

6. Verfahren nach einem der voranstehenden Ansprüche, **dadurch gekennzeichnet, dass** das rekristallisierende Glühen mittels elektromagnetischer Induktion erfolgt.

7. Verfahren nach einem der voranstehenden Ansprüche, **dadurch gekennzeichnet, dass** das beschichtete Stahlblech beim rekristallisierenden Glühen auf Temperaturen oberhalb des A1-Umwandlungspunkts des verwendeten Stahls erhitzt wird.

8. Verfahren nach einem der voranstehenden Ansprüche, **dadurch gekennzeichnet, dass** das Stahlblech nach dem rekristallisierenden Glühen und dem Abkühlen eine Zugfestigkeit von mindestens 500 MPa, bevorzugt von mehr als 650 MPa, und eine Bruchdehnung von mehr als 5%, bevorzugt von mehr als 10% aufweist.

9. Verfahren nach einem der voranstehenden Ansprüche, **dadurch gekennzeichnet, dass** das Stahlblech folgende Gewichtsanteile der Legierungsbestandteile Ti und Nb aufweist:
- Ti: weniger als 0,02 %;
- Nb: weniger als 0,02 %.

10. Verfahren nach einem der voranstehenden Ansprüche, **dadurch gekennzeichnet, dass** das Stahlblech nach dem rekristallisierenden Glühen mittels eines Kühlfluids oder mittels einer Jet-Kühlung mit Inertgas bei einer Kühlrate zwischen 100 K/s und 1200 K/s und bevorzugt bei einer Kühlrate zwischen 750 K/s und 1000 K/s abgekühlt wird.

11. Verfahren nach einem der voranstehenden Ansprüche, **dadurch gekennzeichnet, dass** das rekristallisierende Glühen in einem Zeitintervall von 0,5 bis 1,5 Sekunden, bevorzugt von ca. 1 Sekunde erfolgt, wobei das Stahlblech dabei auf Temperaturen von wenigstens 700°C und bevorzugt von mindestens 720 °C erhitzt wird.

12. Verfahren nach einem der voranstehenden Ansprüche, **dadurch gekennzeichnet, dass** es sich bei der metallischen Beschichtung um eine Korrosionsschutzschicht aus Zinn, Zink, oder Aluminium handelt.

13. Verfahren nach einem der voranstehenden Ansprüche, **dadurch gekennzeichnet, dass** die metallische Beschichtung elektrolytisch auf das Stahlblech aufgebracht wird.

14. Verfahren nach einem der voranstehenden Ansprüche, **dadurch gekennzeichnet, dass** die mit der metallischen Beschichtung beschichtete Oberfläche des Stahlblechs während oder nach dem Abkühlen mit einer Säure behandelt wird, indem das beschichtete Stahlblech in ein Säurebad getaucht wird.

15. Stahlblech, hergestellt aus einem un- oder niedriglegierten und kaltgewalzten Stahl mit folgenden Obergrenzen für den Gewichtsanteil der Legierungsbestandteile:
- C: max. 0,1 %,
- N: max. 0,02 %,
- Mn: max. 0,4 %,
- Si: max. 0,04 %,
- Al: max. 0,1 %,
- Cr: max. 0,1 %,
- P: max. 0,03 %,
- Cu: max. 0,1 %,
- Ni: max. 0,1 %,
- Sn: max. 0,04 %,
- Mo: max. 0,04 %
- V: max. 0,04 %;
- Ti: max. 0,05 %,
- Nb: max. 0,05 %,
- B: max. 0,005 %,
- andere Legierungsbestandteile, einschl. Verunreinigungen:max. 0,05 %,
- Rest Eisen,
welches ein mehrphasiges Gefüge enthaltend Ferrit und mindestens einen der Gefügebestandteile Martensit, Bainit und/oder Restaustenit sowie auf wenigstens einer Oberfläche eine metallische Beschichtung aufweist, wobei zur Ausbildung des mehrphasigen Gefüges und zum Aufschmelzen der metallischen Beschichtung das Stahlblech zunächst rekristallisierend bei einer Aufheizrate von mindestens 75 K/s auf Temperaturen oberhalb der Ac1-Temperatur des Stahls geglüht und nach dem rekristallisierenden Glühen abgeschreckt worden ist.

## Claims

1. Method for manufacturing a packaging steel from a cold-rolled steel sheet made of an unalloyed or low-alloyed steel with a carbon content of less than 0.1 wt% and the following upper limits for the percentage by weight of the alloying constituents:
- N: max. 0.02%,
- Mn: max. 0.4%,
- Si: max. 0.04%,
- Al: max. 0.1%,
- Cr: max. 0.1%,
- P: max. 0.03%,
- Cu: max. 0.1%,
- Ni: max. 0.1%,
- Sn: max. 0.04%,
- Mo: max. 0.04%,
- V: max. 0.04%,
- Ti: max. 0.05%,
- Nb: max. 0.05%,
- B: max. 0.005%,
- other alloying constituents, including impurities: max. 0.05%,
- remainder iron,
**characterised in that** the steel sheet is firstly coated with a metallic coating and then recrystallization annealed with a heat-up rate of more than 75 K/s to temperatures above the Acl temperature of the steel so that the metallic coating is melted on, and the coated and annealed steel sheet is finally quenched with a cooling rate of at least 100 K/s, through which a multi-phase structure is produced in the steel which comprises ferrite and at least one of the structure constituents martensite, bainite and/or residual austenite.

2. Method according to claim 1, **characterised in that** for the recrystallization annealing the coated steel sheet is heated with a heat-up rate of more than 100 K/s to temperatures of more than 700°C and finally quenched with a cooling rate of at least 500 K/s.

3. Method according to claim 2, **characterised in that** after the recrystallization annealing the coated steel sheet is quenched with a cooling rate of more than 1000 K/s.

4. Method according to claim 1, **characterised in that** the multi-phase structure consists to more than 80% and preferably to at least 95% of the structure constituents ferrite, martensite, bainite and/or residual austenite.

5. Method according to one of the preceding claims, **characterised in that** the steel sheet is produced from a low-alloyed steel which contains boron and/or niobium and/or titanium.

6. Method according to one of the preceding claims, **characterised in that** the recrystallization annealing is carried out by means of electromagnetic induction.

7. Method according to one of the preceding claims, **characterised in that** for the recrystallization annealing the coated steel sheet is heated to temperatures above the A1 conversion point of the steel being used.

8. Method according to one of the preceding claims, **characterised in that** after the recrystallization annealing and the cooling the steel sheet has a tensile strength of at least 500 MPa, preferably of more than 650 MPa, and an elongation at break of more than 5%, preferably of more than 10%.

9. Method according to one of the preceding claims, **characterised in that** the steel sheet has the following percentages by weight of the alloying constituents Ti and Nb:
- Ti: less than 0.02%,
- Nb: less than 0.02%.

10. Method according to one of the preceding claims, **characterised in that** after the recrystallization annealing the steel sheet is cooled by means of a cooling fluid or by means of jet cooling with inert gas with a cooling rate of between 100 K/s and 1200 K/s and preferably with a cooling rate of between 750 K/s and 1000 K/s.

11. Method according to one of the preceding claims, **characterised in that** the recrystallization annealing is carried out in an interval of time of from 0.5 to 1.5 seconds, preferably of approximately 1 second, during which the steel sheet is heated to temperatures of at least 700°C and preferably of at least 720°C.

12. Method according to one of the preceding claims, **characterised in that** the metallic coating is a corrosion-prevention coating made of tin, zinc or aluminium.

13. Method according to one of the preceding claims, **characterised in that** the metallic coating is applied to the steel sheet electrolytically.

14. Method according to one of the preceding claims, **characterised in that** during or after the cooling the surface of the steel sheet coated with the metallic coating is treated with an acid by immersing the coated steel sheet in an acid bath.

15. Steel sheet, manufactured from an unalloyed or low-alloyed and cold-rolled steel with the following upper limits for the percentage by weight of the alloying constituents:
- C: max. 0.1%,
- N: max. 0.02%,
- Mn: max. 0.4%,
- Si: max. 0.04%,
- Al: max. 0.1%,
- Cr: max. 0.1%,
- P: max. 0.03%,
- Cu: max. 0.1%,
- Ni: max. 0.1%,
- Sn: max. 0.04%,
- Mo: max. 0.04%,
- V: max. 0.04%,
- Ti: max. 0.05%,
- Nb: max. 0.05%,
- B: max. 0.005%,
- other alloying constituents, including impurities: max. 0.05%,
- remainder iron,
which has a multi-phase structure containing ferrite and at least one of the structure constituents martensite, bainite and/or residual austenite and a metallic coating on at least one surface, wherein to form the multi-phase structure and to melt on the metallic coating the steel sheet is firstly recrystallization annealed with a heat-up rate of more than 75 K/s to temperatures above the Acl temperature of the steel and after the recrystallization annealing is quenched.

## Revendications

1. Procédé de fabrication d'un acier d'emballage à partir d'une tôle d'acier laminée à froid d'un acier non allié ou à alliage faible avec une teneur en carbone inférieure à 0,1 % en poids et des seuils supérieurs suivants pour la proportion en poids des composants d'alliage :
- N : au maximum 0,02 %,
- Mn : au maximum 0,4 %,
- Si : au maximum 0,04 %,
- Al : au maximum 0,1 %,
- Cr : au maximum 0,1 %,
- P : au maximum 0,03 %,
- Cu : au maximum 0,1 %,
- Ni : au maximum 0,1 %,
- Sn : au maximum 0,04 %,
- Mo : au maximum 0,04 %,
- V : au maximum 0,04 %,
- Ti : au maximum 0,05 %,
- Nb : au maximum 0,05 %,
- B : au maximum 0,005 %,
- d'autres composants d'alliage comprenant des impuretés : au maximum 0,05 %
- fer résiduel,
**caractérisé en ce que** la tôle d'acier est tout d'abord revêtue avec un revêtement métallique et ensuite recuite de façon recristallisante à une vitesse de chauffage supérieure à 75 K/s à des températures supérieures à la température Ac1 de l'acier, de sorte que le revêtement métallique fonde et la tôle d'acier revêtue et recuite est ensuite trempée à une vitesse de refroidissement d'au moins 100 K/s, moyennant quoi une structure multiphasique se forme dans l'acier qui comprend du ferrite et au moins l'un des composants de structure martensite, bainite et/ou austénite résiduelle.

2. Procédé selon la revendication 1, **caractérisé en ce que** la tôle d'acier revêtue lors du recuit recristallisant est chauffée à une vitesse de chauffage supérieure à 100 K/s à des températures supérieures à 700 °C et ensuite est trempée à une vitesse de refroidissement d'au moins 500 K/s.

3. Procédé selon la revendication 2, **caractérisé en ce que** la tôle d'acier revêtue après le recuit recristallisant est trempée à une vitesse de refroidissement supérieure à 1000 K/s.

4. Procédé selon la revendication 1, **caractérisé en ce que** la structure multiphasique est constituée par plus de 80 % et de préférence par moins de 95 % en parties de composants de structure ferrite, martensite, bainite et/ou austénite résiduelle.

5. Procédé selon l'une des revendications précédentes, **caractérisé en ce que** la tôle d'acier est réalisée d'un acier à alliage faible, qui contient du bore et/ou du niobium et/ou du titane.

6. Procédé selon l'une des revendications précédentes, **caractérisé en ce que** le recuit recristallisant s'effectue au moyen d'une induction électromagnétique.

7. Procédé selon l'une des revendications précédentes, **caractérisé en ce que** la tôle d'acier revêtue est chauffée lors du recuit recristallisant à des températures supérieures au point de transition A1 de l'acier utilisé.

8. Procédé selon l'une des revendications précédentes, **caractérisé en ce que** la tôle d'acier après le recuit recristallisant et le refroidissement présente une résistance à la traction d'au moins 500 MPa, de préférence de plus de 650 MPa et un allongement à la rupture de plus de 5 %, de préférence de plus de 10 %.

9. Procédé selon l'une des revendications précédentes, **caractérisé en ce que** la tôle d'acier présente les proportions en poids suivantes des composants d'alliage Ti et Nb :
- Ti : moins de 0,02 % ;
- Nb : moins de 0,02 %.

10. Procédé selon l'une des revendications précédentes, **caractérisé en ce que** la tôle d'acier après le recuit recristallisant est refroidie au moyen d'un fluide de refroidissement ou au moyen d'un refroidissement par projection avec un gaz inerte à une vitesse de refroidissement entre 100 K/s et 1200 K/s et de préférence à une vitesse de refroidissement entre 750 K/s et 1000 K/s.

11. Procédé selon l'une des revendications précédentes, **caractérisé en ce que** le recuit recristallisant se produit dans un intervalle temporel de 0,5 à 1,5 seconde, de préférence d'environ 1 seconde, dans lequel la tôle d'acier est chauffée à des températuresd'au moins 700 °C et de préférence d'au moins 720 °C.

12. Procédé selon l'une des revendications précédentes, **caractérisé en ce que** le revêtement métallique est une couche de protection contre la corrosion en étain, zinc ou aluminium.

13. Procédé selon l'une des revendications précédentes, **caractérisé en ce que** le revêtement métallique est appliqué de façon électrolytique sur la tôle en acier.

14. Procédé selon l'une des revendications précédentes, **caractérisé en ce que** la surface de la tôle d'acier revêtue avec le revêtement métallique est traitée avec un acide pendant ou après le refroidissement, la tôle d'acier revêtue étant immergée dans un bain d'acide.

15. Tôle en acier fabriquéeà partir d'unacier non allié ou à alliage faible et laminé à froid avecdes seuils supérieurs suivants pour la proportion en poids des composants d'alliage:
- C : au maximum 0,1 %,
- N : au maximum 0,02 %,
- Mn : au maximum 0,4 %,
- Si : au maximum 0,04 %,
- Al : au maximum 0,1 %,
- Cr : au maximum 0,1 %,
- P : au maximum 0,03 %,
- Cu : au maximum 0,1 %,
- Ni : au maximum 0,1 %,
- Sn : au maximum 0,04 %,
- Mo : au maximum 0,04 %,
- V : au maximum 0,04 %,
- Ti : au maximum 0,05 %,
- Nb : au maximum 0,05 %,
- B : au maximum 0,005 %,
- d'autres composants d'alliage comprenant des impuretés : au maximum 0,05 %
- fer résiduel,
qui présente une structure multiphasique contenant du ferrite et au moins l'un des composants de structure martensite, bainite et/ou austénite résiduelle ainsi que sur au moins une surface, un revêtement métallique, dans laquelle pour la formation de la structure multiphasique et pour la fusion du revêtement métallique, la tôle en aciera tout d'abord été recuite de façon recristallisante à une vitesse de chauffage d'au moins 75 K/s à des températures supérieures à la température Ac1 de l'acier et a été trempée après le recuit recristallisant.
